# EUROPÄISCHE PATENTSCHRIFT

(11) **EP 0 589 150 B1**
(45) Veröffentlichungstag und Bekanntmachung des Hinweises auf die Patenterteilung: **11.09.1996**
(21) Anmeldenummer: 93109973.3
(22) Anmeldetag: 23.06.1993
(51) Int. Cl.: H05B 7/06, F27D 11/08

(54) **Bodenelektrode für Gleichstrom-Lichtbogenöfen**
Bottom electrode for direct current arc furnaces
Electrode basse pour four de soudage à courant continu

(30) Priorität: 11.07.1992 DE 4222854
(43) Veröffentlichungstag der Anmeldung: 30.03.1994
(73) Patentinhaber: MAN Gutehoffnungshütte Aktiengesellschaft, 46122 Oberhausen (DE)
(72) Erfinder: Schubert, Manfred, Dipl.-Ing., D-4200 Oberhausen 11 (DE)

(56) Entgegenhaltungen:
- EP-A- 0 058 817
- EP-A- 0 156 126
- US-A- 5 142 650

## Beschreibung

Die Erfindung betrifft eine Bodenelektrode für Gleichstrom-Lichtbogenöfen mit einer Stahlplatte und mit einem oder mehreren in dem Herdboden stehend angeordneten Metallstäben bzw. einer Vielzahl von Metallplatten, dessen bzw. deren untere Enden in einer Basisplatte der Bodenelektrode lösbar befestigt sind, mit den Metallstab bzw. die Metallstäbe oder die Metallplatten umgebenden Schichten aus leitenden bzw. nicht leitenden Feuerfest-Materialien, wobei eine mittlere Schicht aus einer leitfähigen Stampfmasse besteht, und geht aus von der EP-A-0 156 126.

Bei dem Einsatz einer Bodenelektrode mit auf einer Basisplatte angeordneten Kontaktelektroden in Form von Metallstäben nach der EP-B-0 058 817 und der Ausführung des Herdbodens in mehreren übereinander aufgebauten leitenden bzw. nichtleitenden Schichten aus feuerfestem Material nach der EP-B-0 156 126 dienen die Metallstäbe als Anode, während eine zentrisch von oben angeordnete Graphitelektrode als Kathode geschaltet ist, die durch den schwenkbaren Deckel in das Schmelzgefäß hineinragt.

Für das Einschmelzen von Schrott oder anderen metallischen Einsatzstoffen mündet dabei der Lichtbogen zunächst im Einsatzmaterial, später in der von der Schlacke abgedeckten Schmelze.

Der Strom fließt dabei von der Graphitelektrode zu der in der Mitte des Herdbodens eingesetzten Bodenelektrode und führt zu einer ständigen Zirkulation und teilweisen Durchmischung des über der Bodenelektrode anstehenden flüssigen Stahl- und Schlackegemenges. Es wurde beobachtet, daß speziell bei Gleichstromlichtbogenöfen sowohl die Schlacke als auch die sich darunter befindende Schmelze während des Stromflusses von außen nach innen Richtung Lichtbogen zirkuliert und daß durch die hohe spezifische Strombelastung von Kathode und Anode sich oberhalb der Bodenelektrode ein verstärkter Verschleiß gegenüber dem gestampften, nichtleitenden Herdboden bemerkbar macht.

Zusätzlich wurde festgestellt, daß ein erhöhter Verschleiß durch sog. Lochfraß an den Metallstäben im Bereich der oberen feuerseitigen, nichtleitenden Schicht aus Feuerfest-Material auftritt.

Die Aufgabe der Erfindung besteht darin, eine mit Feuerfest-Materialien zugestellte Bodenelektrode zu konzipieren, bei der die Abriebfestigkeit sowie die Leitfähigkeit verbessert, der Verschleiß gegenüber dem Herdboden vermindert wird, bei der ferner die Turbulenzen im Bereich des verstärkten Stromflusses abgebaut/reduziert und bei der eine zusätzliche Kühlwirkung erreicht.werden kann.

Die Lösung erfolgt in der Weise, wie es in den Patentansprüchen angegeben ist.

Bei der aus der EP-B-O 058 817 bekannten Anordnung der Kontaktelektroden auf der Basisplatte in Form von Metallstäben, insbesondere Stahlstäben, im Herdboden eines Gleichstrom-Lichtbogenofens kann die Bodenelektrode sowohl außerhalb des Ofens vorgefertigt als auch nach Einsatz der Kontaktelektroden in den Boden des Ofens mit den erforderlichen Feuerfest-Materialien in Form von Steinen und Massen belegt werden.

Als Maßnahmen zur Verbesserung des Abriebes bzw. des Verschleißes werden an Stelle der relativ weichen Massen vorgefertigte gebrannte Steine verwendet, die zusätzlich durch höhere monolithische Anteile, beispielsweise Tonerde, stabilisiert sind und trotzdem eine ausreichende Wärmeabfuhr gewährleisten.

Bei dem Aufbau der Bodenelektrode ist darauf zu achten, daß die elektrische Leitfähigkeit von Feuerfest-Massen und -Steinen und der Metallstäbe annähernd gleich ist.

Durch das Einbringen von Spülgasen durch die Bodenelektrode in die Schmelze wird die Kühlwirkung im Bereich des dichtesten Stromflusses verbessert und der Verschleiß des Feuerfest-Materials am Übergang zum Bad reduziert.

Die fertiggestellte, mit Feuerfest-Materialien ausgestattete Bodenelektrode besteht aus einer oberen Schicht aus leitenden Steinmaterialien, einer mittleren Schicht aus einer leitfähigen Stampfmasse und einer unteren Schicht aus nichtleitender Isoliermasse, wobei die leitende Steinschicht wenigstens die Hälfte der Höhe der Bodenelektrode und die nichtleitende Isoliermasse mindestens die doppelte Höhe der Bodenplatte aufweist.

Auf die obere Schicht des Feuerfestmaterials der Bodenelektrode kann bei fortlaufendem Verschleiß gegenüber dem Herdboden eine leitfähige, hochtemperaturbeständige Flickmasse nach Entleeren des Stahlsumpfes aufgebracht werden (sog. Heißreparatur).

Die Metallstäbe werden im Bereich der leitenden Steinschicht in eine nichtleitende, jedoch abriebfeste Masse, eingebettet, um den Stromfluß in der Anode gezielt durch die Metallstäbe zu leiten und um Quer- bzw. Wirbelströme zwischen den Metallstäben und den leitenden Steinen der oberen Schicht der Bodenelektrode zu unterbinden.

Das Einbringen des Spülgases durch die Bodenelektrode in die Schmelze erfolgt entweder über die Metallstäbe oder über senkrecht verlaufende Sackbohrungen im unteren Teil der mit Feuerfestmaterial ausgekleideten Bodenelektrode.

Die Metallstäbe sind im unteren Bereich mit einer Kernbohrung versehen, die bis in den Bereich der oberen leitenden Schicht reicht. In diesem Bereich werden eine Reihe von Radialbohrungen in die Stäbe eingebracht, damit das Spülgas durch die Isolierschicht in das Bad gelangen kann. Die Metallstäbe können auch durchgehend als Rohre ausgebildet werden, so daß ein direkter und gezielter Durchfluß des Spülgases in die Schmelze erfolgt.

Alternativ kann das Spülgas in das Feuerfestmaterial der Bodenelektrode über senkrecht verlaufende Sackbohrungen direkt in den unteren Teil der Bodenelektrode eingebracht werden. Die Bodenelektrode wird zusätzlich durch senkrecht stehende Bleche in Segmente aufgeteilt und die Sackbohrungen werden segmentweise mit einer einstellbaren Spülgasmenge über eine Spülgasleitung beaufschlagt. Zusätzlich können oberhalb der Öffnungen der Sackbohrungen horizontal angeordnete Spülgasverteilerbleche angeordnet werden, um eine effektivere Spülwirkung zu erreichen.

Ein Ausführungsbeispiel der Erfindung wird in den schematischen Patentfiguren näher erläutert.
- Fig. 1: zeigt einen Querschnitt durch die fertiggestellte Bodenelektrode,
- Fig. 2: zeigt eine Draufsicht auf die Bodenelektrode,
- Fig. 3: zeigt einen Querschnitt durch die Bodenelektrode nach Heißreparatur,
- Fig. 4: zeigt einen Querschnitt durch den unteren Bereich des Ofengefäßes,
- Fig. 5: zeigt einen Querschnitt durch die Bodenelektrode mit im unteren Teil angeordneten Sackbohrungen,
- Fig. 6: zeigt eine Draufsicht auf die Bodenelektrode mit senkrecht stehenden Segmentblechen,
- Fig. 7: zeigt einen Querschnitt durch Kathode und Anode bei Beginn des Betriebes,
- Fig. 8: zeigt einen weiteren Querschnitt durch den Unterteil des Lichtbogenofens während des Betriebes mit fortlaufendem Verschleiß der Bodenelektrode.

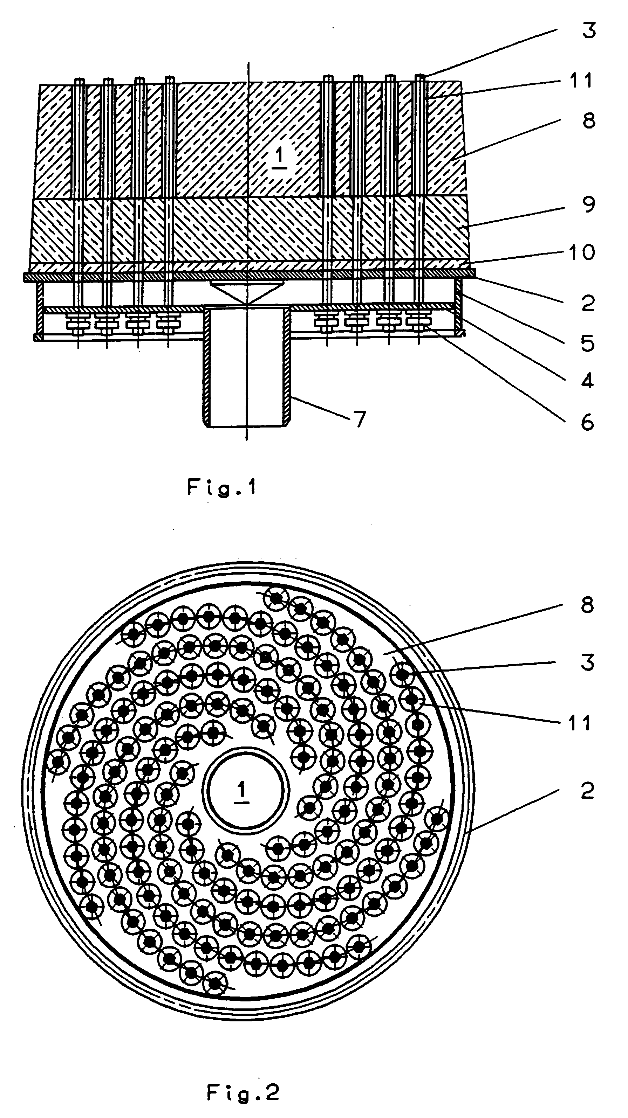

In Fig. 1 und 2 ist der Aufbau der erfindungsgemäßen Bodenelektrode (1) dargestellt, die aus dem metallischen und dem nichtmetallischen, aus Feuerfest-Materialien aufgebauten Teil, besteht.

Zum metallischen Teil gehören die beiden Stahlplatten, die Stahlplatte (2) der Bodenelektrode (1) und die Basisplatte (4), die Metallstäbe (3), die Befestigungselemente (6) sowie die Kontakte der Bodenelektrode (7) für den Stromanschluß.

Der feuerfeste Teil setzt sich aus einer oberen Schicht aus leitenden Steinen (8), einer mittleren Schicht aus leitfähiger Stampfmasse (9) und einer unteren Schicht aus nichtleitender Isoliermasse (10) zusammen.

Die Metallstäbe (3) sind im Bereich der Steine (8) in einer nichtleitenden, hochtemperaturbeständigen Masse (11) eingebettet.

Fig. 2 zeigt in der Draufsicht ein Ausführungsbeispiel der Bodenelektrode (1) mit in Bogensegmenten angeordneten Metallstäben (3).

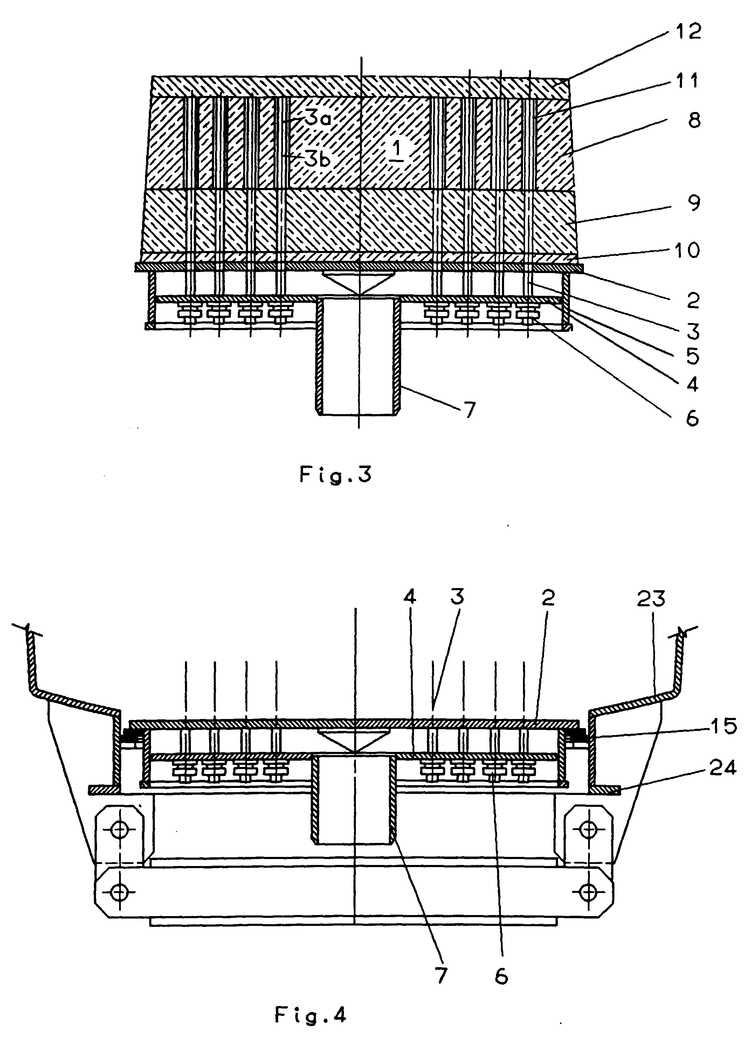

Fig. 3 zeigt die Bodenelektrode (1), bei der auf Grund eines fortlaufenden Verschleißes oberhalb der Metallstäbe (3) und der leitenden Steine (8) eine leitende, hochtemperaturbeständige Flickmasse (12) aufgebracht ist.

Zum Austritt der Spülgase aus den Metallstäben (3) sind im Bereich der leitenden Steine (8) koaxiale Kernlöcher (3a) mit einer Reihe von Gasaustrittsöffnungen (3b) vorgesehen.

In Fig. 4 ist die Anordnung des metallischen Teiles der Bodenelektrode (2, 3, 4, 6) im unteren Teil des Ofengefäßes (23, 24) dargestellt. Die Isolierung von Ofengefäß (23) und Bodenelektrode (1) erfolgt durch eine Isoliervorrichtung (15), die auf Pratzen des Gefäßes (23) aufliegt.

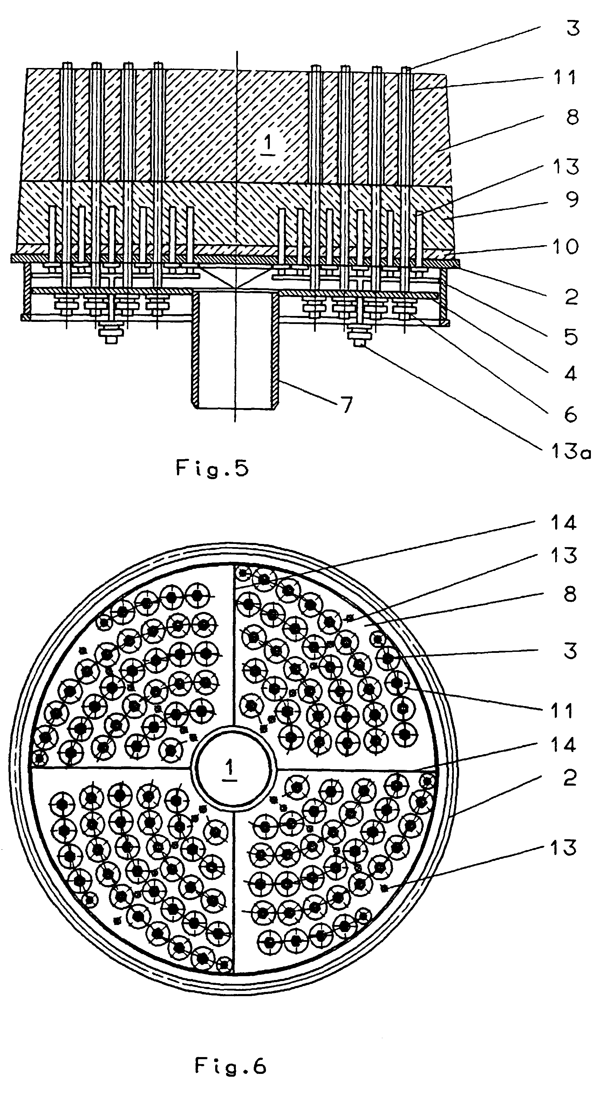

Das Einbringen eines Spülgases durch die Bodenelektrode (1) in die Schmelze (19) erfolgt entweder, wie in Fig. 3 gezeigt, über die Metallstäbe (3) mit einer Reihe von Gasaustrittsöffnungen oder, wie in Fig. 5 dargestellt, über senkrecht angeordnete Sackbohrungen (13) im unteren Teil der mit Feuerfestmaterial (9, 10) ausgekleideten Bodenelektrode (1), die mit einer Spülgasleitung (13a) verbunden sind, die zwischen der Stahl- (2) und Basisplatte (4) angebracht sein kann.

Fig. 6 zeigt eine Draufsicht auf die Bodenelektrode (1), die hier durch senkrecht stehende Bleche (14), in beispielsweise vier Segmente (14) aufgeteilt wird.

Die Sackbohrungen (13) können bei Bedarf segmentweise mit einer einstellbaren Spülgasmenge über die Spülgasleitung (13a) versorgt werden.

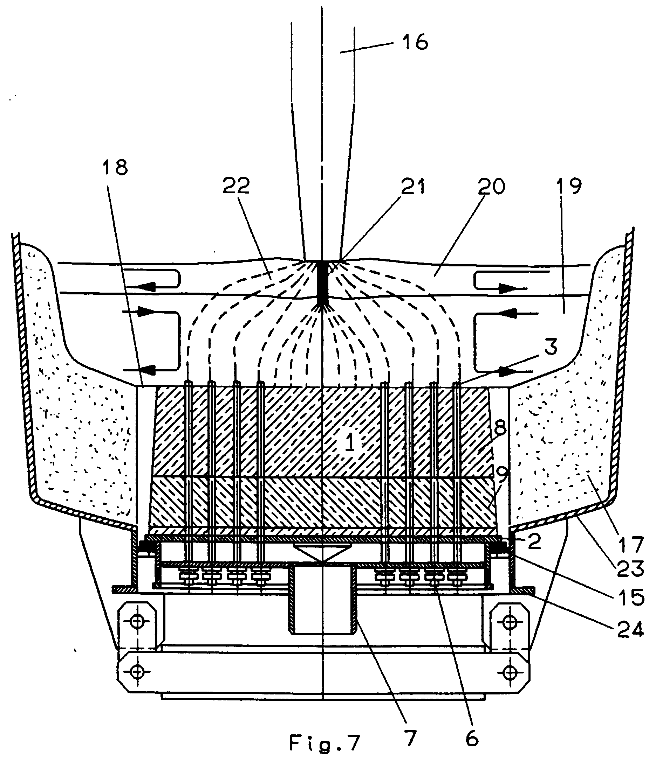

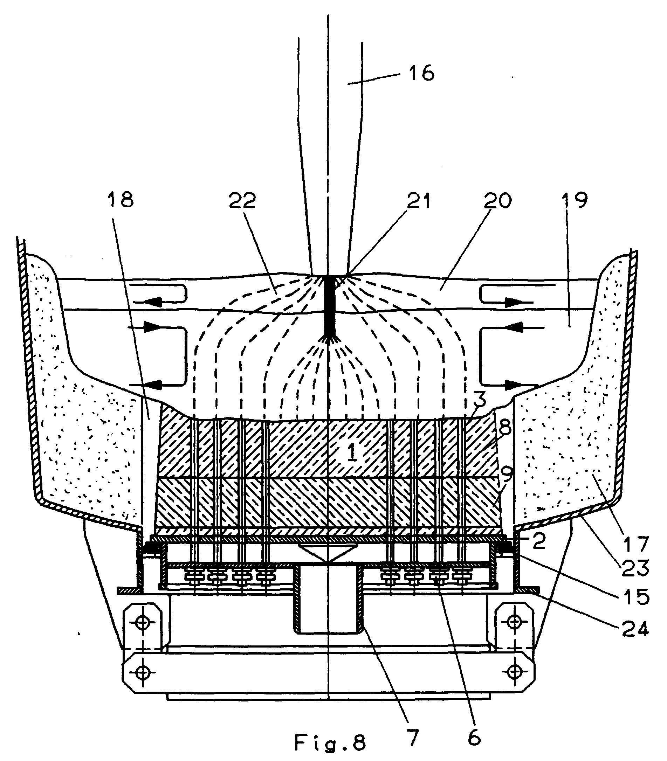

In den Fig. 7 und 8 ist der Gleichstrom-Lichtbogenofen im Betriebszustand dargestellt.

Der Strom (22) fließt von der Graphitelektrode (Kathode) (16) über die Schmelze (19) und die darüber schwimmende Schlacke (20) zu der Bodenelektrode (1) und erzeugt zwischen Schmelze (19) und Graphitelektrode (16) den Lichtbogen (21).

Schlacke (20) und Stahlschmelze (19) zirkulieren im Ofengefäß oberhalb der Bodenelektrode (1), dem Herdboden (17) und der Stampfmasse (18) entsprechend der eingezeichneten Pfeilrichtung. Durch diese Zirkulation, verbunden mit einem erhöhten Strom- und Wärmefluß, verschleißen die obere leitende Schicht (8) und die Metallstäbe (3) der Bodenelektrode (1) schneller als der nichtleitende, gestampfte Herdboden (17) und die Stampfmasse (18).

Dieser in Fig. 8 dargestellte voreilende Verschleiß wird entsprechend der in Fig. 3 dargestellten Maßnahme durch Aufgabe einer leitenden, hochtemperaturbeständigen Flickmasse (12) sowie durch Einleiten von Inertgasen durch die Metallstäbe (3) bzw. durch im unteren Teil des Bodens eingebrachte Sackbohrungen gemindert.

Das Aufbringen einer leitenden, hochtemperaturbeständigen Flickmasse (12) erfolgt als sog. Heißreparatur nach vollständiger Entleerung des Schmelzgefäßes. Die Flickmasse (12) überdeckt nach durchgeführter Reparatur die Metallstäbe (3), die leitenden Steine (8) und Teile der nichtleitenden Stampfmasse (18), die zwischen Herdboden (17) und ausgemauerter Bodenelektrode (1) eingebracht wurde.

### Bezugsziffernliste:

- 1: Bodenelektrode (Anode)
- 2: Stahlplatte der Bodenelektrode
- 3: Metall- oder Stahlstäbe
- 3a: Koaxiale Kernlöcher
- 3b: Gasaustrittsöffnungen
- 4: Basisplatte
- 5: Zylindrisches Unterteil
- 6: Befestigungselement
- 7: Kontakte der Bodenelektrode
- 8: leitende Steine
- 9: leitfähige Stampfmasse
- 10: nichtleitende Isoliermasse
- 11: nichtleitende, hochtemperaturbeständige Masse
- 12: leitende, hochtemperaturbeständige Flickmasse
- 13: Sackbohrungen für Spülgas
- 13a: Spülgasleitung
- 14: senkrechte Segmentbleche
- 15: Isoliervorrichtungung Bodenelektrode
- 16: Graphitelektrode (Kathode)
- 17: Herdboden
- 18: Stampfmase, nichtleitend
- 19: Schmelze
- 20: Schlacke
- 21: Lichtbogen
- 22: Stromfluß schematisch
- 23: Mantel des Ofengefäßes
- 24: Konsole am Ofengefäß

## Patentansprüche

1. Bodenelektrode für Gleichstrom-Lichtbogenöfen mit einer Stahlplatte (2) und mit einem oder mehreren in dem Herdboden stehend angeordneten Metallstäben (3) bzw. einer Vielzahl von Metallplatten, dessen bzw. deren untere Enden in einer Basisplatte (4) der Bodenelektrode (1) lösbar befestigt ist bzw. sind, mit den Metallstab (3) bzw. die Metallstäbe (3) oder die Metallplatten umgebenden Schichten (8, 9, 10) aus leitenden bzw. nicht leitenden Feuerfest-Materialien, wobei eine mittlere Schicht (9) aus einer leitfähigen Stampfmasse besteht,
dadurch gekennzeichnet,
daß die Bodenelektrode (1) auf den Bereich oberhalb des Umfanges der Stahlplatte (2) beschränkt ist, daß der bzw. die Metallstäbe (3) bzw. die Metallplatten in eine obere Schicht (8) aus leitenden Steinmaterialien, der mittleren Schicht (9) aus einer leitfähigen Stampfmasse und eine auf der Stahlplatte (2) aufliegende untere Schicht (10) aus einer nichtleitenden Isoliermasse eingebettet sind.

2. Bodenelektrode nach Anspruch 1,
dadurch gekennzeichnet,
daß die obere Schicht aus leitenden Steinmaterialien (8) wenigstens die Hälfte der Höhe des Herdbodens (17) ausmacht.

3. Bodenelektrode nach den Ansprüchen 1 und 2,
dadurch gekennzeichnet,
daß der Metallstab bzw. die Metallstäbe (3) oder die Metallplatten in der oberen, leitenden Schicht (8) in eine nichtleitende, hochtemperaturbeständige Masse (11) aus kohlenstoffarmem Material eingebettet sind.

4. Bodenelektrode nach den Ansprüchen 1 bis 3,
dadurch gekennzeichnet,
daß durch die Bodenelektrode (1) Spülgase in die Schmelze (19) führbar sind.

5. Bodenelektrode nach den Ansprüchen 1 bis 4,
dadurch gekennzeichnet,
daß in die Metallstäbe (3) koaxiale Kernlöcher (3a) eingebracht sind und die Metallstäbe (3) seitliche Gasaustrittsöffnungen (3b) aufweisen.

6. Bodenelektrode nach Anspruch 5,
dadurch gekennzeichnet,
daß die Gasaustrittsöffnungen (3b) in dem Bereich der aus leitenden Steinmaterialien (8) bestehenden oberen Schicht angeordnet sind.

7. Bodenelektrode nach Anspruch 5,
dadurch gekennzeichnet,
daß die Gasaustrittsöffnungen (3b) unterhalb des Kopfes der Metallstäbe (3) angeordnet sind.

8. Bodenelektrode nach den Ansprüchen 1 bis 4,
dadurch gekennzeichnet,
daß in das Feuerfest-Material (9, 10) der Bodenelektrode (1) senkrecht verlaufende Sackbohrungen (13) für Spülgas eingebracht sind.

9. Bodenelektrode nach Anspruch 8,
dadurch gekennzeichnet,
daß die Bodenelektrode (1) durch senkrecht stehende Bleche (14) in Segmente aufgeteilt ist und die Sackbohrungen (13) segmentweise mit einer einstellbaren Spülgasmenge über eine Spülgasleitung (13a) beaufschlagbar sind.

10. Bodenelektrode nach Anspruch 1,
dadurch gekennzeichnet,
daß auf die obere Schicht des Feuerfest-Materials (8, 11) der Bodenelektrode (1) gegebenenfalls eine leitende, hochtemperaturbeständige Flickmasse (12) aufbringbar ist.

## Claims

1. Bottom electrode for direct current arc furnaces having a steel plate (2) and having one or more metal rods (3), or a large number of metal plates, arranged upright in the hearth floor, the lower ends of which rods or plates are releasably secured in a base plate (4) of the bottom electrode (1), having layers (8, 9, 10) of conductive or non-conductive fire-proof materials surrounding the metal rod(s) (3) or the metal plates, wherein a middle layer (9) comprises a conductive tamping material, characterised in that the bottom electrode (1) is limited to the region above the circumference of the steel plate (2), in that the metal rod(s) (3) or the metal plates are embedded in an upper layer (8) of conductive mineral materials, the middle layer (9) of a conductive tamping material and a lower layer (10) of a non-conductive insulating material supported on the steel plate (2).

2. Bottom electrode according to Claim 1, characterised in that the upper layer of conductive mineral materials (8) constitutes at least half of the height of the hearth floor (17).

3. Bottom electrode according to Claims 1 and 2, characterised in that the metal rod(s) (3) or the metal plates in the upper, conductive layer (8) are embedded in a non-conductive, high-temperature-resistant material (11) of low-carbon material.

4. Bottom electrode according to Claims 1 to 3, characterised in that rinsing gases can be introduced into the smelt (19) through the bottom electrode (1).

5. Bottom electrode according to Claims 1 to 4, characterised in that coaxial core holes (3a) are formed in the metal rods (3), and the metal rods (3) have side gas outlet openings (3b).

6. Bottom electrode according to Claim 5, characterised in that the gas outlet openings (3b) are arranged in the region of the upper layer comprising conductive mineral materials (8).

7. Bottom electrode according to Claim 5, characterised in that the gas outlet openings (3b) are arranged below the top of the metal rods (3).

8. Bottom electrode according to Claims 1 to 4, characterised in that vertically extending blind bores (13) for rinsing gas are formed in the fire-proof material (9, 10) of the bottom electrode (1).

9. Bottom electrode according to Claim 8, characterised in that the bottom electrode (1) is divided into segments by vertically upright pieces of sheet-metal (14) and an adjustable amount of rinsing gas can be applied to the blind bores (13) segment by segment by way of a rinsing gas line (13a).

10. Bottom electrode according to Claim 1, characterised in that a conductive, high-temperature-resistant patching material (12) can optionally be applied to the upper layer of the fire-proof material (8, 11) of the bottom electrode (1).

## Revendications

1. Electrode de fond pour un four à arc électrique alimenté en courant continu, comprenant une plaque d'acier (2) et une ou plusieurs barres métalliques (3) debout sur le fond du creuset du four, ou un grand nombre de plaques métalliques dont les extrémités inférieures sont fixées de manière amovible dans une plaque de base (4) de l'électrode de fond (1), avec des couches (8, 9, 10) de matière réfractaire conductrice ou non conductrice entourant la tige métallique (3) ou les tiges métalliques (3) ou les plaques métalliques, une couche intermédiaire (9) étant en une masse tassée, conductrice,
caractérisée en ce que
l'électrode de fond (1) est limitée à la zone au-dessus de la périphérie de la plaque d'acier (2),
la ou les tiges métalliques (3) ou les plaques métalliques sont noyées dans une couche supérieure (8) en une matière minérale conductrice, et une couche intermédiaire (9) en une masse tassée, conductrice, et une couche inférieure (10) de matière isolante non conductrice sur la plaque d'acier (2).

2. Electrode de fond selon la revendication 1,
caractérisée en ce que
la couche supérieure en une matière minérale conductrice (8) correspond au moins à la moitié de la hauteur du creuset du fond de four (17).

3. Electrode de fond selon les revendications 1 et 2,
caractérisée en ce que
la tige métallique ou les tiges métalliques (3) ou les plaques métalliques sont noyées dans la couche supérieure conductrice (8), dans une masse très réfractaire (11) non conductrice en matière à faible teneur en carbone.

4. Electrode de fond selon les revendications 1 à 3,
caractérisée en ce qu'
à travers l'électrode de fond (1) peuvent passer des gaz de rinçage pour arriver dans le bain de matière en fusion (19) .

5. Electrode de fond selon les revendications 1 à 4,
caractérisée en ce que
les tiges métalliques (3) comportent des orifices centraux (3a) coaxiaux et les tiges métalliques (3) comportent des orifices latéraux de sortie de gaz (3b).

6. Electrode de fond selon la revendication 5,
caractérisée en ce que
les orifices de sortie de gaz (3b) sont prévus au niveau de la couche supérieure formée des matières minérales conductrices (8) .

7. Electrode de fond selon la revendication 5,
caractérisée en ce que
les orifices de sortie de gaz (3b) se trouvent en dessous de la tête des tiges métalliques (3).

8. Electrode de fond selon les revendications 1 à 4,
caractérisée en ce que
des perçages borgnes (13), verticaux, sont prévus dans la matière réfractaire (9, 10) de l'électrode de fond (1) pour le gaz de rinçage.

9. Electrode de fond selon la revendication 8,
caractérisée en ce que
l'électrode de fond (1) est subdivisée en segments par des tôles (14) debout, verticales, et les perçages borgnes (13) reçoivent par segment, une quantité de gaz de rinçage, réglable par l'intermédiaire d'une conduite de gaz de rinçage (13a).

10. Electrode de fond selon la revendication 1,
caractérisée en ce que
sur la couche supérieure de la matière réfractaire (8, 11) de l'électrode de fond (1) on a le cas échéant un pisé très réfractaire (12), conducteur.
